## Europäisches Patentamt
## European Patent Office
## Office européen des brevets

(19)

(11) Numéro de publication: **0 125 437**
**B1**

(12)
# FASCICULE DE BREVET EUROPÉEN

(45) Date de publication du fascicule du brevet:
04.02.87

(51) Int. Cl.⁴: **B 60 C 11/12**

(21) Numéro de dépôt: **84103128.9**

(22) Date de dépôt: **21.03.84**

(54) **Eléments en relief d'une bande de roulement pour pneumatique comportant des incisions à trace ondulé ou brisé.**

(30) Priorité: **12.04.83 FR 8306072**

(43) Date de publication de la demande:
**21.11.84 Bulletin 84/47**

(45) Mention de la délivrance du brevet:
**04.02.87 Bulletin 87/6**

(84) Etats contractants désignés:
**AT BE CH DE GB IT LI LU NL SE**

(56) Documents cité:
**DE-A-1 480 932**
**DE-A-3 118 407**
**FR-A-791 250**
**GB-A-867 556**
**GB-A-1 150 295**
**LU-A-58 967**
**US-A-2 983 005**

(73) Titulaire: **MICHELIN & CIE (Compagnie Générale des Etablissements Michelin) Société dite:, 4 rue du Terrail, F-63000 Clermont- Ferrand (FR)**

(72) Inventeur: **Flechtner, Charles, Chemin du Char, F-63140 Châtel- Guyon (FR)**

(74) Mandataire: **Renaudie, Jacques, Michelin & Cie Service K. Brevets, F-63040 Clermont- Ferrand Cédex (FR)**

EP 0 125 437 B1

## Description

L'invention concerne les bandes de roulement pour pneumatiques et, plus particulièrement, les bandes de roulement dont les éléments en relief (blocs ou nervures) sont pourvus d'incisions destinées à augmenter l'adhérence du pneumatique sur le sol.

De telles bandes de roulement sont décrites, par exemple, dans les brevets FR-A-791 250, FR-A-779 108 ou FR-A-1 528 052. Les incisions peuvent avoir des parois qui se touchent ou être situées à des distances l'une de l'autre qui sont de l'ordre de 0,5 millimètre, en général inférieures à 1 mm. Elles peuvent être de trois types:

1) soit incluses à l'intérieur des contours de certains éléments en relief,

2) soit prendre naissance à l'intérieur de certains éléments en relief et déboucher unilatéralement dans une des rainures délimitant ces éléments en relief,

3) soit traverser de part en part certains éléments en relief de la bande de roulement et déboucher de part et d'autre dans des rainures de délimitation desdits éléments.

L'efficacité des incisions est liée à leur longueur, a leur orientation moyenne par rapport à la direction longitudinale du pneumatique et à leur profondeur. C'est pourquoi on a imaginé, pour éviter les inconvénients d'une multiplication du nombre des incisions, de substituer aux incisions rectilignes des incisions ayant des tracés ondulés, par exemple sinusoïdaux, ou en ligne brisée, par exemple en zigzag, la longueur d'onde des ondulations ou lignes brisées étant inférieure à la longueur des incisions et l'amplitude de crête à crête étant comprise entre 0,5 fois et 1,5 fois la longueur d'onde.

Pour en simplifier la fabrication dans les moules de vulcanisation, ces incisions ont un tracé ou une forme identique en allant de la surface des éléments en relief destinée à entrer en contact avec le sol jusqu'au fond des incisions. Ce fond est habituellement situé au niveau des rainures délimitant les éléments en relief comportant les incisions, c'est-à-dire au niveau du fond de la bande de roulement et à faible distance radiale de l'armature du pneumatique.

En particulier, lorsque deux incisions en ligne brisée ou ondulée sont voisines et d'orientations sensiblement parallèles, ou lorsqu'une incision en ligne brisée ou ondulée est voisine d'une rainure de la bande de roulement, elles délimitent entre elles un volume de gomme, appelé lame de gomme. Ce volume est délimité par les parois des deux incisions ou de l'incision et de la rainure, par sa surface sur la bande de roulement, et par sa surface d'ancrage concentrique à la surface de la bande de roulement et située au niveau de la base de l'incision la moins profonde. Lorsque la surface d'ancrage d'une lame est telle que sa largeur (par convention distance entre crêtes les plus éloignées desdites incisions ou distance entre crête la plus éloignée de l'incision et la paroi de la rainure) est inférieure à la longueur de la lame (distance par convention mesurée sur la surface d'ancrage parallèlement ou sensiblement parallèlement à l'orientation moyenne desdites incisions, entre les points extrêmes de l'incision la plus courte) et à la hauteur radiale de la lame (par convention, distance mesurée perpendiculairement à la surface de la bande de roulement, entre cette surface et le fond de l'incision la moins profonde), des fissures se forment à la base des lames et peuvent se propager jusqu'à provoquer l'arrachement de la lame de gomme de la bande de roulement.

On peut attribuer cet inconvénient au fait que, sous l'effet des efforts dans l'aire de contact du pneumatique, les tensions dans la gomme formant les lames sont maximales au niveau des crêtes des ondulations ou lignes brisées des incisions. Ces crêtes sont, en effet, les parties les plus distantes de la fibre moyenne de flexion des lames de gomme. Il en résulte une fatigue importante de la gomme au niveau où les crêtes des lames sont implantées dans le fond de la bande de roulement.

Le but de la présente invention est d'éviter la formation et la propagation de telles fissures tout en conservant les avantages des incisions ondulées ou en lignes brisées.

On a déjà proposé de supprimer les fissures de la gomme prenant naissance à l'endroit où des incisions isolées débouchent dans le fond des rainures délimitant des éléments en relief (incisions des types 2 et 3 ci-dessus) en remplaçant ces incisions par des incisions (du type 1 ci-dessus) qui ne débouchent pas dans les rainures de délimitation. On a de même proposé de réaliser des incisions à hauteur variable, la hauteur étant alors fonction de l'orientation de chaque segment de la ligne brisée représentant l'incision. Cependant, le principe de l'invention est différent et, bien que s'appliquant de préférence, aux incisions ondulées ou en lignes brisées des types 2 et 3, et aux incisions de profondeur constante, est indépendant du type d'incision. Ce principe consiste à conférer aux incisions une amplitude plus faible et, de préférence, nulle au fond des incisions, qu'au niveau de la surface de contact des éléments en relief de la bande de roulement avec le sol. Autrement dit, selon l'invention, l'amplitude des incisions décroît en direction du fond des incisions.

C'est ainsi que l'invention porte sur une bande de roulement pour pneumatique comportant des éléments en relief munis d'incisions ondulées ou en ligne brisée de longueur d'onde et d'amplitude faibles par rapport aux dimensions des éléments en relief (correspondant au document FR-A-791 250), caractérisé en ce que les incisions ont des amplitudes plus faibles au fond des incisions qu'à la surface de la bande de roulement. Ces amplitudes sont de préférence nulles.

Le principe de l'invention étant d'utiliser des incisions dont les fonds ont des amplitudes inférieures à celles à la surface de la bande de roulement, on peut utiliser des incisions dont les amplitudes décroissent linéairement en fonction de la profondeur. Il est cependant avantageux d'utiliser des incisions dont les amplitudes sont constantes sur une profondeur donnée, inférieure à la profondeur des incisions, pour décroître ensuite en direction du fond de celles-ci.

Dans le cas où les éléments en relief de la bande de roulement comportent plusieurs lames de gomme, afin de ne pas augmenter à la base de ces lames les contraintes moyennes d'une lame par rapport à l'autre, la transformation de ligne ondulée ou brisée d'amplitude donnée à une amplitude plus faible ou nulle se fait à surface d'ancrage constante par adaptation de la largeur de la lame. Mais on peut renforcer l'implantation d'une lame, si nécessaire, en conférant à celle-ci une largeur constante depuis la surface de la bande de roulement jusqu'à la surface d'ancrage.

L'utilisation de l'invention se montre particulièrement avantageuse en combinaison avec une armature de carcasse radiale coiffée d'une armature de sommet rigidifiant la bande de roulement et/ou des lames de gomme disposées, dans les éléments en relief, soit parallèlement à la direction longitudinale du pneumatique, soit obliquement ou transversalement par rapport à cette même direction.

L'invention s'applique aussi avantageusement soit à des incisions perpendiculaires à la surface de la bande de roulement, soit à des incisions présentant une inclinaison par rapport à un plan normal à cette surface, incisions telles que décrites dans le brevet français FR 2 418 719.

Le dessin ci-joint illustre à titre non limitatif des exemples d'exécution de l'invention décrits dans la suite de la description qui s'y réfère.

Sur ce dessin:
- la figure 1 est une vue en perspective d'une portion d'une bande de roulement comportant des incisions conformes à l'invention,
- les figures 2A à 2C sont des coupes planes parallèles à la surface de roulement, d'une incision de la bande de roulement de la figure 1,
- les figures 3 à 5 montrent d'autres variantes de l'invention.

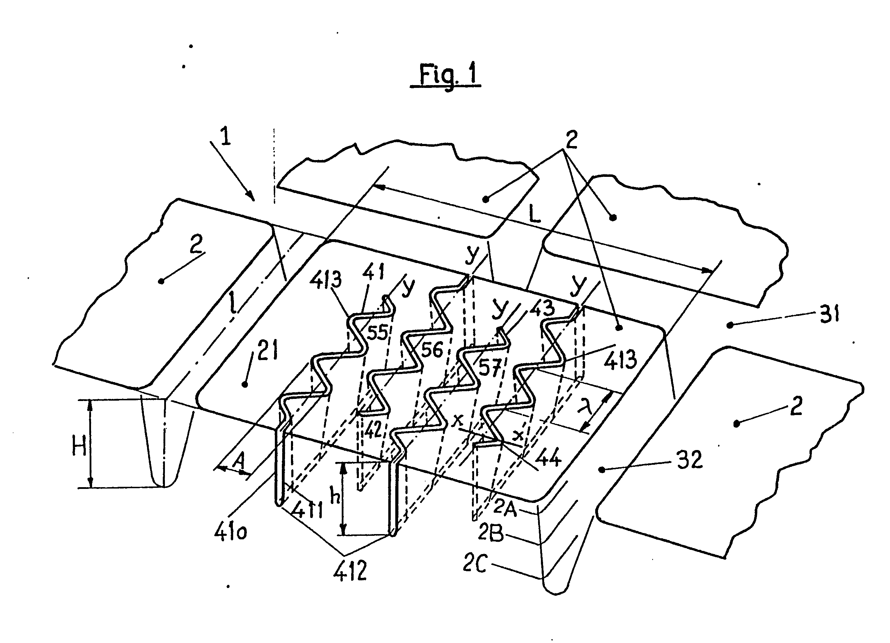

La portion de bande de roulement 1 de la figure 1 comporte des blocs 2 en relief. Les blocs 2 sont rectangulaires avec des arêtes arrondies, de longueur L et de largeur 1 à la surface 21 de la bande de roulement 1. Ces blocs 2 sont séparés les uns des autres, d'une part par des rainures longitudinales 31, parallèles à la direction longitudinale du pneumatique (on entend par rainures longitudinales des rainures faisant avec la direction longitudinale un angle compris entre 0 et 20°) et d'autre part par des rainures transversales 32 (on entend par rainures transversales des rainures faisant avec la direction longitudinale un angle compris entre 70° et 110°). Ces rainures ont une profondeur H.

Les blocs 2 comportent des incisions 41, 42, 43, 44 conformes à l'invention. A la surface 21 de la bande de roulement 1, les incisions 41 à 44 sont ondulées avec des orientations moyennes (figurées par les axes y) transversales parallèles aux rainures transversales 32 (sont dites parallèles des orientations dont les axes font un angle compris entre 0 et 20°) Les incisions 41 à 44 naissent à l'intérieur du bloc 2 et débouchent alternativement les unes 41, 43 dans une des rainures longitudinales 31, les autres 42, 44 dans l'autre rainure longitudinale 31 délimitant le bloc 2 du côté opposé (incisions du type 2 décrit plus haut).

Les incisions 41 à 44 sont successivement voisines dans le sens longitudinal du pneumatique, délimitant ainsi une lame de gomme 55, entre les parties en regard des incisions voisines 41 et 42, une lame 56 entre les parties en regard des incisions voisines 42 et 43 et une lame 57 entre les parties en regard des incisions voisines 43 et 44. La longueur d'onde $\lambda$ des E ondulations des incisions 41 à 44 (constante dans le cas de la figure 1 pour la clarté du dessin) mesurée sur la surface 21 de la bande de roulement, c'est-à-dire du bloc 2, est égale à 1,15 fois l'amplitude A mesurée de crête à crête. La longueur d'onde $\lambda$ et l'amplitude A des incisions sont faibles par rapport aux dimensions 1 et L sur la surface de la bande de roulement du bloc en relief, sans être cependant proportionnelles à ces dimensions 1 et L. Par contre, les dimensions des lames (longueur moyenne et largeur moyenne) sont choisies en fonction de la mobilité désirée que l'on veut conférer à l'élément en relief.

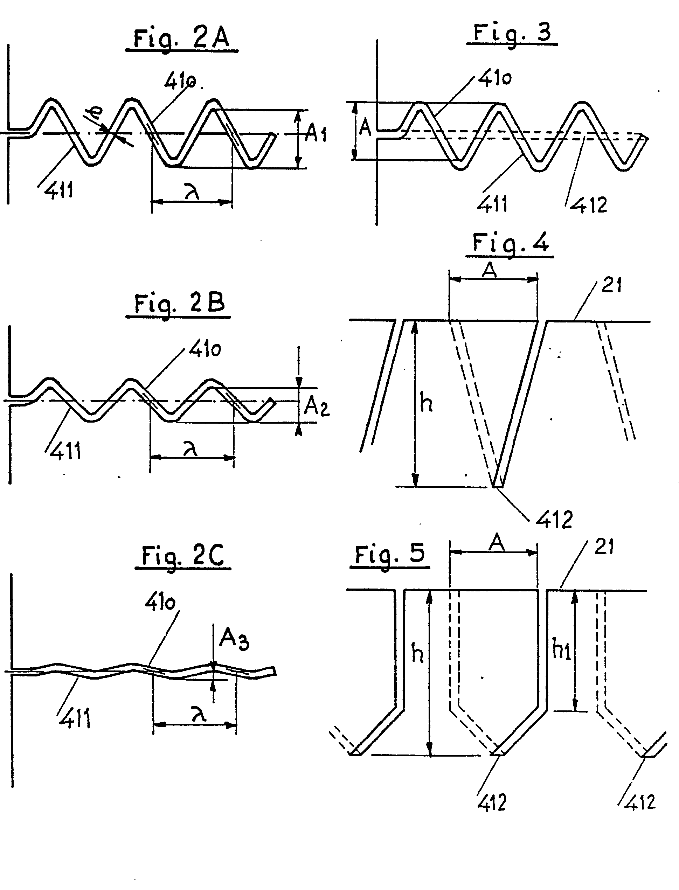

Les incisions 41 à 44 ont des parois 410, 411 représentées chacune par des traits séparés 410, 411. Dans le cadre de l'invention, la distance e (fig. 2A) entre les parois 410, 411 des incisions 41 à 44 reste en général inférieure à 1 mm, pour être pratiquement nulle dans le cas où les parois 410, 411 se touchent. Les incisions 41 à 44 s'étendent sur une profondeur radiale h constante dans le bloc 2. Ainsi, le fond des incisions 41 à 44 se situe à une profondeur h voisine ou égale à la profondeur H des rainures 32 entourant le bloc 2 mais n'excédant pas cette profondeur H. De la surface 21 du bloc jusqu'au fond 412 des incisions 41-44, la longueur d'onde est, de préférence, constante pour une même ondulation.

Par contre, suivant l'invention, l'amplitude A des ondulations 41 à 44 décroît depuis la surface 21 du bloc 2 en direction du fond 412 des incisions, comme montre aux figures 2A à 2C. Celles-ci constituent des coupes planes effectuées à différentes profondeurs, parallèles à la surface de roulement 21 de la portion du bloc 2 contenant une incision telle que 43. Ainsi, au niveau 2A, le plus proche de la surface de roulement 21, l'amplitude A1 est plus petite que l'amplitude A à la surface de roulement 21 du bloc 2. Au niveau 2B, intermédiaire entre le précédent 2A et le fond 412 de l'incision 43, l'amplitude A2 est plus petite que l'amplitude A1 au niveau 2A, mais plus grande que l'amplitude A3 au niveau 2C du fond 412 de l'incision 43 situé à la distance radiale h de la surface du bloc 2.

Dans une autre variante des incisions 41-44 conformes à l'invention, l'amplitude A3 au niveau 2C du fond 412 est nulle. Autrement dit, le fond 412 des incisions est, par exemple, rectiligne. Sur la figure 3 on montre en superposition les amplitudes A d'une telle incision à la surface 21 du bloc 2 et le fond 412 rectiligne de l'incision.

Afin de simplifier l'usinage des éléments en relief correspondants du moule de vulcanisation, il est avantageux que la décroissance de l'amplitude A en direction du fond 412 des incisions soit linéaire, telle que représentée sur la fig. 4 (vue suivant une coupe XX' de l'incision 44).

Une troisième variante préférentielle (fig. 5) de l'invention prévoit que l'amplitude des incisions reste constante et égale à l'amplitude A à la surface 21 du bloc 2 sur une profondeur h1, inférieure à la profondeur h des incisions.

A partir de la profondeur h1 jusqu'au fond 412 des incisions 41 à 44, l'amplitude des ondulations décroît conformément à l'invention.

De préférence aussi, les ondulations de deux incisions 41, 42; 42, 43; 43, 44 voisines formant une lame de gomme 55, 56, 57 sont parallèles au moins à la surface 21 du bloc 2. Mais il est avantageux de maintenir ce parallélisme sur toute la profondeur h des incisions 41 à 44, afin de simplifier la fabrication des éléments en relief correspondants du moule de vulcanisation.

La décroissance des amplitudes des ondulations des incisions conformes à l'invention en direction du fond des incisions amène une meilleure répartition des contraintes au niveau des crêtes 413 des incisions formant les lames de gomme 55 à 57, notamment au fond 412 des incisions, c'est-à-dire au niveau de l'implantation des lames 55 à 57 dans la partie 22 non incisée de la bande de roulement, comprise entre le fond des incisions 41 à 44 et l'armature de sommet (non représentée) du pneumatique. On évite ainsi la formation de fissures de fatigue dans la gomme, qui partent des crêtes du fond 412 des incisions à amplitude constante et sont susceptibles de provoquer jusqu'à l'arrachement des lames 55 à 57.

**Revendications**

1. Bande de roulement pour pneumatique comportant des éléments en relief (2) munis d'incisions ondulees ou en ligne brisée (41, 42, 43, 44) de longueur d'onde (λ) et d'amplitude (A) faibles par rapport aux dimensions des éléments en relief, caractérisée en ce que les incisions ont des amplitudes plus faibles (A3) au fond des incisions (412) qu'à la surface de la bande de roulement.

2. Bande de roulement pour pneumatique selon la revendication 1, caractérisée en ce que les amplitudes sont nulles au fond des incisions (412).

3. Bande de roulement pour pneumatique selon l'une des revendications 1 ou 2, caractérisée en ce que, partant de la surface de la bande de roulement, les amplitudes sont constantes sur une profondeur (h1) inférieure à la profondeur des incisions (h), puis décroissent ensuite jusqu'à la profondeur des incisions.

4. Bande de roulement pour pneumatique selon l'une des revendications 1 à 3, caractérisée en ce qu'elle comporte, de manière connue en soi, des incisions voisines (41, 42, 43, 44) délimitant ainsi entre elles des lames de gomme (55, 56, 57), les surfaces des lames, mesurées sur des surfaces concentriques à la surface de la bande de roulement, étant constantes de la surface de la bande de roulement à la surface d'ancrage au fond des incisions (412).

5. Bande de roulement pour pneumatique selon l'une des revendications 1 à 3, caractérisée en ce qu'elle comporte, de manière connue en soi, des incisions voisines délimitant ainsi entre elles des lames de gomme, la largeur d'une ou plusieurs lames étant constante de la surface de la bande de roulement au fond des incisions.

6. Bande de roulement pour pneumatique selon l'une des revendications 4 ou 5, caractérisée en ce que les lames de gomme, de manière connue en soi, sont disposées parallèlement, obliquement ou transversalement par rapport à la direction longitudinale du pneumatique.

7. Bande de roulement pour pneumatique, selon l'une des revendications 4 à 6, caractérisée en ce que les lames de gomme, de manière connue en soi, présentent une inclinaison par rapport à un plan normal à la surface de la bande de roulement.

8. Pneumatique caractérisé en ce qu'il comporte une bande de roulement selon l'une des revendications 1 à 7.

**Patentansprüche**

1. Lauffläche für einen Luftreifen mit vorstehenden Blocken (2), die gewellte oder im Zick-Zack verlaufende Einschnitte (41, 42, 43, 44) mit der Wellenlänge (λ) und der Amplitude (A), die klein sind im Vergleich zu den Abmessungen der Blöcke, aufweist, dadurch gekennzeichnet, daß die Einschnitte an ihrem Boden (412) kleinere Amplituden (A3) aufweisen als auf der Laufflächenoberfläche.

2. Lauffläche nach Anspruch 1, dadurch gekennzeichnet, daß die Amplituden am Boden der Einschnitte (412) die Größe Null aufweisen.

3. Lauffläche nach einem der Ansprüche 1 oder 2, dadurch gekennzeichnet, daß, ausgehend von der Oberfläche der Lauffläche, die Amplituden bis in eine Tiefe (h1), die kleiner ist als die Tiefe der Einschnitte (h) konstant sind und dann bis zur Tiefe der Einschnitte abnehmen.

4. Lauffläche nach einem der Ansprüche 1 bis 3, dadurch gekennzeichnet, daß in an sich bekannter Weise benachbarte Einschnitte (41, 42, 43, 44) zwischen sich Gummilamellen (55, 56, 57) begrenzen, deren Oberfläche, gemessen auf Flächen die konzentrisch zur Oberfläche der Lauffläche sind, von der Oberfläche der Lauffläche bis zur Verankerungsfläche in der Tiefe der Einschnitte (412) konstante Größe aufweist.

5. Lauffläche nach einem der Ansprüche 1 bis 3, dadurch gekennzeichnet, daß in an sich bekannter Weise benachbarte Einschnitte zwischen sich Gummilamellen begrenzen, von denen eine oder mehrere von der Oberfläche der Lauffläche bis zur Tiefe der Einschnitte konstante Größe aufweisen.

6. Lauffläche nach einem der Ansprüche 4 oder 5, dadurch gekennzeichnet, daß die Lamellen in an sich bekannter Weise parallel schräg oder quer zur Längsrichtung des Reifens angeordnet sind.

7. Lauffläche nach einem der Ansprüche 4 bis 6, dadurch gekennzeichnet, daß die Lamellen in an sich bekannter Weise bezüglich einer Ebene normal zur Obefläche der Lauffläche geneigt sind.

8. Luftreifen, dadurch gekennzeichnet, daß er eine Lauffläche nach einem der Ansprüche 1 bis 7 aufweist.

## Claims

1. A tire tread comprising elements in relief (2) provided with undulated or broken line incisions (41, 4 2, 43, 44) of a wave-length ($\lambda$) and an amplitude (A) which are small as compared with the dimensions of the elements in relief, characterized by the fact that the incisions have smaller amplitudes ($A_3$) at the bottom of the incisions (412) than at the surface of the tread.

2. A tire tread according to claim 1, characterized by the fact that the amplitudes are zero at the bottom of the incisions (412).

3. A tire tread according to claim 1 or 2, characterized by the fact that, starting from the surface of the tread, the amplitudes are constant over a depth ($h_1$) less than the depth of the incisions (h) and then decrease to the bottom. of the incisions.

4. A tire tread according to one of the claims 1 to 3, characterized by the fact that it comprises, in known manner, adjacent incisions (41, 42, 43, 44) defining rubber slices (55, 56, 57) between each other, the surfaces of the slices, measured on surfaces concentric to the surface of the tread, being constant from the surface of the tread to the anchoring surface at the bottom of the incisions (412).

5. A tire tread according to one of the claims 1 to 3, characterized by the fact that it comprises, in known manner, adjacent incisions defining rubber slices between each other, the width of one or more slices being constant from the surface of the tread to the anchoring surface at the bottom of the incisions.

6. A tire tread according to one of the claims 4 or 5, characterized by the fact that the rubber slices, in known manner, are arranged parallel, oblique or transverse with respect to the longitudinal direction of the tire.

7. A tire tread accordinq to one of the claims 4 to 5, characterized by the fact that the rubber slices, in known manner, are inclined with respect to a plane normal to the surface of the tread.

8. A tire characterized by the fact that it comprises a tread according to one of the claims 1 to 7.

Fig. 1

Fig. 2A

Fig. 3

Fig. 2B

Fig. 4

Fig. 2C

Fig. 5